# EUROPÄISCHE PATENTSCHRIFT

(11) **EP 0 943 908 B1**
(45) Veröffentlichungstag und Bekanntmachung des Hinweises auf die Patenterteilung: **24.07.2002**
(21) Anmeldenummer: 98117575.5
(22) Anmeldetag: 16.09.1998
(51) Int. Cl.: G01L 19/14, G01D 11/24

(54) **Messanzeigevorrichtung**
Displaying device
Dispositif d'affichage

(30) Priorität: 19.03.1998 DE 19811970
(43) Veröffentlichungstag der Anmeldung: 22.09.1999
(73) Patentinhaber: Kobold, Klaus, 2000 Antwerpen (BE)
(72) Erfinder: Kobold, Klaus, 2000 Antwerpen (BE)
(74) Vertreter: KEIL & SCHAAFHAUSEN

(56) Entgegenhaltungen:
- DE-U- 9 109 176
- DE-U- 29 511 976
- DOUGLAS M. CONSIDINE: "Process Instruments and Control Handbook" 1985 , MCGRAW-HILL BOOK COMPANY , NEW YORK XP002123753 * Seite 3.32 - Seite 3.36 *
- BERGE G: "DRUCKMESSTECHNIK - NEUE MOGLICHKEITEN DURCH DIE KOMBINATION INNOVATIVER TECHNIKEN" MESSEN PRUFEN AUTOMATISIEREN. INTERNATIONALES FACHJOURNAL FUR MESS-, STEUER- UND REGELTECHNIK,DE,HANS HOLZMANN VERLAG. BAD WORISHOFEN, Nr. 5, Seite 218-222 XP000052154

## Beschreibung

Die Erfindung bezieht sich auf eine Meßanzeigevorrichtung gemäß dem Oberbegriff des Anspruch 1.

Es sind Meßanzeigevorrichtungen bekannt, die bspw. der Art ausgebildet sind, daß keine Hilfsenergie zu ihrem Betrieb benötigt wird. Bei ihnen ist, wie z.B. bei dem digitalen Transmitter-Anzeigegerät EV-97 der Keller AG, eine LCD-Anzeige in einem seitlich an ein Zwischenstück angeschlossenen Gehäuse vorgesehen, welches den Druckmeßumformer mit dem Gerätestecker verbindet, auf welchen eine Leitungsdose aufschraubbar ist. Diese Ausführung hat einen verhältnismäßig großen Platzbedarf und ist in bestimmten Einbausituationen schlecht ablesbar.

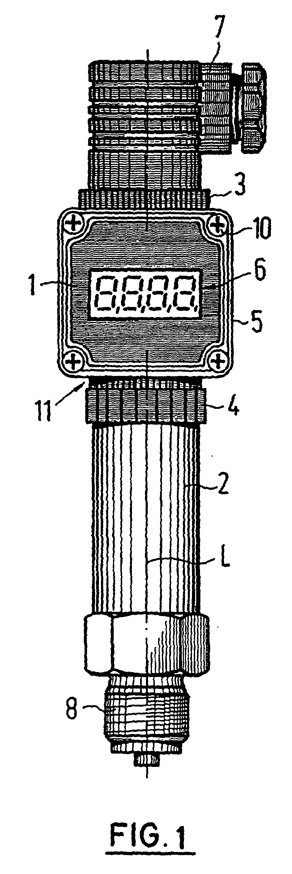

Aus Douglas M. Considine: "Process Instruments and Control Handbook", 1985, MacGraw-Hill Book Company, New York, XP 002123753, S. 3.32 bis 3.36, Fig. 1 ist ein ähnlicher differentieller Druckmessumformer bekannt, an den über ein Verbindungsstück eine Anzeigevorrichtung mit einem in einem Gehäuse aufgenommenen Display angeschlossen ist. Von der Anzeigevorrichtung gehen zwei Anschlüsse seitlich ab. Derartige Meßanordnungen haben den Nachteil, daß aufgrund der seitlich abstehenden Anzeigevorrichtung ein verhältnismäßig großer Platzbedarf besteht und die Anzeigen in bestimmten Einbausituationen schlecht ablesbar sind.

Aus der DE 295 11 976 U ist eine Referenzdruckmessanordnung mit einem Gehäuse bekannt, in welchem ein Steckerteil und ein Drucksensor druckdicht eingesetzt sind. Das Gehäuse ist auf der Seite des zu messenden Drucks mit einem Druckanschlußteil druckdicht verbunden, durch das der zu messende Druck zum Drucksensor gelangt. Im Innenraum des Gehäuses ist eine Auswerteelektronik für die elektrischen Signale des Drucksensors angeordnet. Auf der dem Drucksensor gegenüberliegenden Seite sind elektrische Anschlüsse über ein Steckerteil mit der Auswertelektronik elektronisch verbunden. Nachteilig ist bei dieser Meßanordnung, daß keine optische Meßanzeige vorgesehen ist, so daß für eine Überprüfung des Drucks stets zusätzliche Geräte notwendig sind, die separat an die Referenzdruckanordnung angeschlossen werden müßten.

Aus dem Artikel Berge, Gerhard: "Druckmesstechnik - Neue Möglichkeiten durch die Kombination innovativer Techniken", Zeitschrift "Messen, Prüfen, Automatisieren", 1989, Nr. 5, Seiten 218 bis 222, XP 000052154 ist ein Druckmesser bekannt, der aus einem Sensor, einem Messverstärker und einem nachgeschalteten Auswertegerät (Anzeige) aufgebaut ist. Alle drei Komponenten sind in einem Gehäuse vereint. Dabei kann das Gehäuse mit den einzelnen Komponenten relativ zu dem Druckanschluß verdreht werden, so daß die Anzeige in eine Ableseposition gebracht werden kann. Bei dieser Ausführung ist jedoch das gesamte Meß- und Anzeigegerät in einem Gehäuse integriert, wobei der Druckanschluß relativ zu dem Aufnehmer, dem Verstärker und den Auswertegeräten verdrehbar angeordnet ist. Dies erfordert im Inneren des Gerätes ein vergleichsweise aufwendigen Druckanschluß.

Aufgabe der vorliegenden Erfindung ist es, eine Meßanzeigevorrichtung der eingangs genannten Art zu schaffen, welche kompakt und dennoch gut ablesbar ist.

Diese Aufgabe wird erfindungsgemäß mit einer Meßanzeigevorrichtung mit den Merkmalen des Anspruchs 1 gelöst.

Gehäuse, Druckmeßumformer und Gerätestecker mit Leitungsdose sind dabei z.B. über Steck-und/oder Schraubverbindungen elektrisch und mechanisch miteinander lösbar verbunden, so daß auf einfachste Weise die erfindungsgemäße Messanzeigevorrichtung bei allen handelsüblichen Sensoren auch nachträglich in bestehende Anlagen eingebaut werden kann. Das Gehäuse ist ferner um seine Längsachse drehbar gegenüber dem Druckmessumformer, wodurch als zusätzlicher Vorteil die Anzeige bei beliebiger Position des Druckmessumformers immer von vorne ablesbar ist.

Vorzugsweise ist das Gehäuse auch um die Längsachse drehbar mit der Leitungsdose verbunden.

Eine einfache Montage ist möglich, wenn das Gehäuse mittels Zentralschraube auf einen Gerätestecker des Druckmessumformers aufschraubbar ist.

Auch kann das Gehäuse aufgrund drehbarer Lagerung des Gerätesteckers des Druckmessumformers über einen Griffring an dem Druckmessumformer axial drehbar sein.

Das Gehäuse kann auch die dem Display zugehörige Elektronik 20 aufnehmen.

Ein weiterer Vorteil der Erfindung besteht darin, dass das Display quer oder parallel zur Längsachse des Gehäuses angeordnet sein kann, da dann auf besonders einfache Weise unterschiedliche Einbaulagen der Anzeige realisierbar sind.

Bei unterschiedlichen Ausführungsformen der Erfindung kann das Display als LCD-, LED- oder als Analog-Anzeige ausgebildet sein.

Vorzugsweise ist eine Frontabdeckung bzw. ein Deckel an dem Gehäuse abnehmbar angebracht, wodurch eine einfache Kalibrierung der Messanzeigevorrichtung, beispielsweise mittels Null- und Endpunkteinstellung über auf der Elektronikplatine befindliche Tasten, erfolgen kann.

In dem Gehäuse der Meßanzeigevorrichtung können aber auch verschließbare Öffnungen vorgesehen sein, durch die eine einfache Kalibrierung der Meßanzeigevorrichtung erfolgen kann, bspw. mittels Nullpunkt- und Meßbereichseinstellung.

Weiterhin wird mit der Erfindung vorgeschlagen, daß der Durchmesser des z.B. aus Kunststoff bestehenden und z.B. würfelförmigen Gehäuses den Durchmesser des Druckmeßumformers nicht wesentlich, d.h. nicht mehr als 20%, vorzugsweise nicht mehr als 10% übersteigt, so daß eine große Kompaktheit erzielt wird. Insbesondere sollte das Gehäuse nicht größer als 42 x 42 x 48 mm sein.

Ausführungsformen der Erfindung sind in der nachfolgenden Beschreibung sowie der Zeichnung dargestellt.

Es zeigen:
- Fig. 1: eine erfindungsgemäße Meßanzeigevorrichtung in Vorderansicht gemäß einer Ausführung der Erfindung,
- Fig. 2: eine Darstellung gemäß Fig. 1 für eine andere Ausführung der Erfindung,

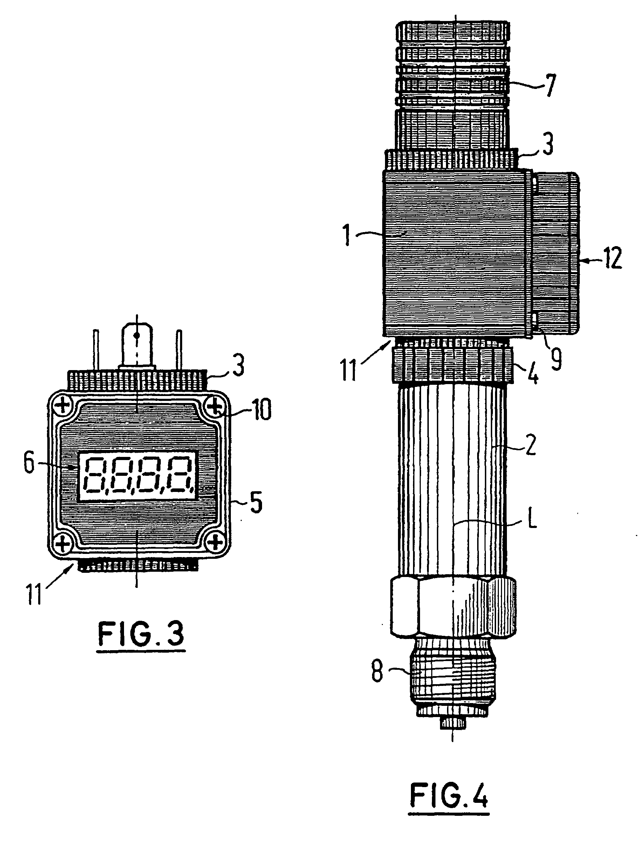

- Fig. 3: eine Darstellung gemäß Fig. 1, jedoch ohne Druckmeßumformer und Leitungsdose, und
- Fig. 4: die Meßanzeigevorrichtung nach Fig. 1 in Seitenansicht,

Die in den Zeichnungen dargestellte Messanzeigevorrichtung 1 hat einen Druckmessumformer 2 mit einer zylindrischen Hülse. Bei derartigen Druckmessumformern erfolgt die Druckmessung z. B. mit Hilfe einer innen liegenden Membran, wobei mittels eines piezo-resistiven Sensorelements in Dünnfilmtechnik die eigentliche Messumformung erfolgt. Die Erfindung ist jedoch nicht auf Druckmessumformer dieses speziellen konstruktiven Typs beschränkt. Der Druckmessumformer 2 ist an einer Seite eines Gehäuses 5 mittels eines als Plastmutter ausgebildeten 10 Griffringes 4 und eines Gerätesteckers drehbar und lösbar angebracht. An dem dem Gehäuse 5 abgewandten Ende trägt der Druckmessumformer 2 einen angeschraubten Prozessanschluss 8, über welchen eine Verbindung mit einer Leitung erfolgen kann, deren Druck zu überwachen ist.

Auf der dem Druckmessumformer 2 diametral gegenüberliegenden Seite des Gehäuses 5 ist ein Gerätestecker 3 mit einer Leitungsdose 7 angeordnet. Das Gehäuse 5 liegt demnach sandwichartig zwischen dem Druckmessumformer 2 und dem Gerätestecker 3. Mittels lösbarer Steck- und/oder Schraubverbindungen ist jeweils eine elektrische und mechanische Verbindung zwischen dem Gehäuse 5 und dem Druckmessumformer 2 bzw. dem Gerätestecker 3 und der Leitungsdose 7 hergestellt. So ist der Gerätestecker 3 beispielsweise an das Gehäuse 5 angeschweißt. Das Gehäuse 5 besteht z.B. aus Kunststoff und ist würfelförmig ausgebildet.

An der Vorderseite des Gehäuses 5 ist eine Frontabdeckung bzw. ein Deckel 9 mittels Schrauben 10 befestigt. In der Mitte der Frontabdeckung 9 ist ein durchsichtiges Fenster eingearbeitet, worunter sich ein Display 6 mit einer z. B. 4-stelligen LED- Anzeige befindet. Die zugehörige Elektronik in Form einer Platine ist ebenfalls in dem Gehäuse 5 untergebracht. In der Mitte der Oberseite des Gehäuses 5 ist der Gerätestecker 3 bzw. eine Stiftplatine mit Hilfe von Ultraschall aufgeschweißt, auf welche die Leitungsdose 7, vorzugsweise ein Würfelstecker, mittels Zentralschraube montiert ist.

Der Boden des Gehäuses 5 kann so ausgebildet sein, daß er einen Bundansatz 11 besitzt, worin sich das Innenteil der Leitungsdose 7 befindet, die mit Versteifungsrippen in dem Gehäuse 5 verklebt ist. Aufgrund des an der Oberseite aufgeschweißten Gerätesteckers 3 sowie eines an der Unterseite befindlichen Bundansatzes 11 mit dem Innenteil der Leitungsdose 7 bildet das gesamte Gehäuse 5 eine Art Gerätestecker nach DIN 43650, der auf den Druckmeßumformer 2 aufgeschraubt werden kann, jedoch zusätzlich ein integriertes Display 6 und einen einstellbaren Grenzkontakt aufweist. Eine drehbare Lagerung des Gerätesteckers 3 bzw. des Griffringes 4 an dem Druckmeßumformer 2 ermöglicht eine Drehung des Gehäuses 5 um seine Längsachse L und damit auch um die Längsachsen von Druckmeßumformer 2, Gerätestecker 3 und Leitungsdose 7. So ist eine Schwenkung des Displays 6 in eine beliebige Ableseposition möglich.

Die beschriebenen Verbindungen sind spritzwasserfest ausgeführt, so daß alle erforderlichen Schutzgrade erreicht werden. Die Montage der beschriebenen Ausführungsform an einem Druckmeßumformer 2 kann bei ungeöffnetem Gehäuse 5 erfolgen.

Bei einer anderen Ausführung der Erfindung sind im Boden des Gehäuses 5 schlitzförmige Öffnungen zur Durchführung der Stifte des zweiten Gerätesteckers des Druckmeßumformers 2 sowie eine Bohrung für die Zentralschraube angeordnet. Das Gehäuse 5 ist in diesem Fall mit dem Gerätestecker des Druckmeßumformers 2 verschraubt, wobei Anschlußklemmen auf die Stifte gesetzt werden. Der Gehäuseunterteil stellt in dieser Ausführungsform eine Leitungsdose und der Anschluß am Deckel einen Gerätestecker dar.

Das Gehäuse 5 ist vorzugsweise als Kunststoff-Spritzguß ausgeführt, worauf die Frontabdeckung bzw. der Deckel 9 über die vier Schrauben 10 und eine Dichtung spritzwasserfest verschraubt ist. Zur Einstellung der Meßspanne und des Grenzkontaktes ist die Frontabdeckung bzw. der Deckel 9 abzuschrauben und über die Tasten auf der darunter befindlichen Elektronikplatine die Einstellung von Null- und Endpunkt sowie des Anzeigeverzögerungs vorzunehmen. Weiterhin ist im Fall der Grenzkontakteinstellung die Einstellung von Schaltpunkt, Schaltrichtung und Schaltverzögerung möglich.

Das Gehäuse 5 ist vermöge der drehbaren Lagerung des Gerätesteckers über den Griffring 4 an dem Druckmeßumformer 2 axial drehbar, so daß eine Schwenkbarkeit der Anzeige auf einfache Weise realisiert ist.

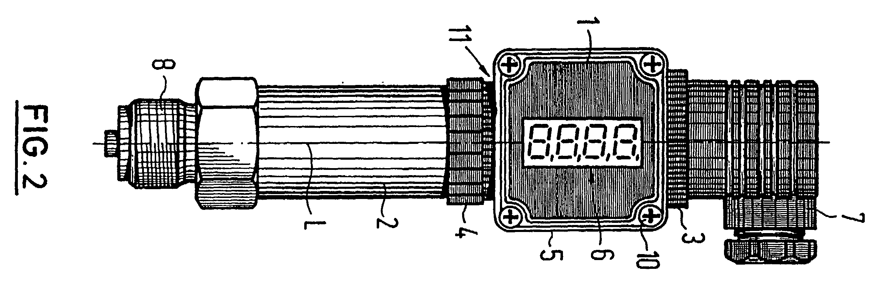

Fig. 2 zeigt eine erfindungsgemäße Vorrichtung, bei der im Unterschied zu der in Fig. 1 dargestellten das Display 6 parallel zur Längsachse L angeordnet ist. Hiermit kann einer unterschiedlichen Einbaulage der Meßanzeigevorrichtung 1 Rechnung getragen werden, ohne daß Nachteile bei der Ablesbarkeit der Anzeige auftreten.

Die Meßanzeigevorrichtung ist vorzugsweise aufgrund der Verwendung eines hilfsenergiefreien Displays ohne Hilfsenergie betreibbar. Grundsätzlich sind als Display 6 LCD-, LED- oder auch Analog- Anzeigeelemente, wie z. B. Zeiger, einsetzbar.

### Bezugszeichenliste

- 1: Meßanzeigevorrichtung
- 2: Druckmeßumformer
- 3: Gerätestecker (angeschweißt)
- 3': Bundansatz
- 4: Griffring (Plastmutter)
- 5: Gehäuse
- 6: Display (LED Anzeige)
- 7: Leitungsdose (nach DIN 43650)
- 8: Prozeßanschluß (G 1/2 A)
- 9: Frontabdeckung bzw. Deckel
- 10: Schrauben
- 11: Bundansatz

- L: Längsachse

## Patentansprüche

1. Messanzeigevorrichtung, mit einem Druckmessumformer (2), einem zugehörigen Gerätestecker (3) und einer daran angeschlossenen Leitungsdose (7) sowie einem Gehäuse (5) mit darin aufgenommenem Display (6), **dadurch gekennzeichnet, daß** der Druckmessumformer (2) und der Gerätestecker (3) mit der Leitungsdose (7) sandwichartig auf einander gegenüberliegenden Seiten des Gehäuses (5) angeschlossen sind und dass das Gehäuse (5) um seine in Richtung des sandwichartigen Aufbaus verlaufende Längsachse (L) drehbar mit dem Druckmessumformer (2) verbunden ist.

2. Messanzeigevorrichtung nach Anspruch 1, **dadurch gekennzeichnet, daß** das Gehäuse (5) um die Längsachse (L) drehbar mit der Leitungsdose (7) verbunden ist.

3. Messanzeigevorrichtung nach Anspruch 1 oder 2, **dadurch gekennzeichnet, daß** das Gehäuse (5) mittels Zentralschraube auf einen Gerätestecker des Druckmessumformers (2) aufschraubbar ist.

4. Messanzeigevorrichtung nach einem der Ansprüche 1 bis 3, **dadurch gekennzeichnet, daß** das Gehäuse (5) aufgrund drehbarer Lagerung des Gerätesteckers des Druckmessumformers über einen Griffring (4) an dem Druckmeßumformer (2) axial drehbar ist.

5. Messanzeigevorrichtung nach einem der vorhergehenden Ansprüche, **dadurch gekennzeichnet, daß** in dem Gehäuse (5) die dem Display (6) zugehörige Elektronik untergebracht ist.

6. Messanzeigevorrichtung nach einem der vorhergehenden Ansprüche, **dadurch gekennzeichnet, daß** das Display (6) quer oder parallel zur Längsachse (L) angeordnet ist.

7. Meßanzeigevorrichtung nach einem der vorhergehenden Ansprüche, **dadurch gekennzeichnet, daß** als Display (6) eine LCD-, LED- oder Analog-Anzeige vorgesehen ist.

8. Meßanzeigevorrichtung nach einem der vorhergehenden Ansprüche, **dadurch gekennzeichnet, daß** das Gehäuse (5) eine abnehmbare Frontabdeckung bzw. einen Deckel (9) aufweist, so daß die Anzeige kalibrierbar und ein Grenzkontakt einstellbar ist, wozu ggf. vorgesehene Tasten auf einer Elektronikplatine in dem Gehäuse (5) dienen.

9. Meßanzeigevorrichtung nach einem der vorhergehenden Ansprüche, **dadurch gekennzeichnet, daß** in der Wandung des Gehäuses (5) ggf. verschließbare Öffnungen für eine Kalibrierung der Anzeige vorgesehen sind.

10. Meßanzeigevorrichtung nach einem der vorhergehenden Ansprüche, **dadurch gekennzeichnet, daß** der Durchmesser des Gehäuses (5) den Durchmesser des Druckmeßumformers (2) nicht wesentlich, das heißt nicht mehr als 20%, vorzugsweise nicht mehr als 10% übersteigt.

11. Meßanzeigevorrichtung nach einem der vorhergehenden Ansprüche, **dadurch gekennzeichnet, daß** die Abmessungen des vorzugsweise aus Kunststoff bestehenden Gehäuses (5) 42 x 42 x 48 mm nicht übersteigen.

## Claims

1. Measuring display device having a pressure transformer (2), a belonging appliance plug (3) and a lead box (7) connected thereto as well as a housing (5) including an integrated display (6), **characterized in that** the pressure transformer (2) and the appliance plug (3) are connected with thelead box (7) in a sandwich-like manner on two opposite sides of the housing (5) and that the housing (5) is rotatably connected with the pressure transformer (2) about its longitudinal axis (L) which is running along the sandwhich-like arrangement.

2. Measuring display device according to claim 1, **characterized in that** the housing (5) is connected with the lead box (7) rotatably about the longitudinal axis (L).

3. Measuring display device according to claim 1 or 2, **characterized in that** the housing (5) is screwable onto an appliance plug of the pressure transformer (2) by means of a central screw.

4. Measuring display device according to one of claims 1 to 3, charaterized in that the housing (5) is axially rotatable at the presusre transformer (2) because of rotatable bedding of the appliance plug of the pressure transformer about a handle ring (4).

5. Measuring display device according to one of the preceding claims, **characterized in that** the electroinc parts being part of the display (6) are stored in the housing (5).

6. Measuring display device according to one of the preceding claims, **characterized in that** the display (6) is arranged transversely or parallell to the longitudinal axis (L).

7. Measuring display device according to one of the preceding claims, **characterized in that** a LCD, LED or anallogue display is provided as a display (6).

8. Measuring display device according to one of the preceding claims, **characterized in that** the housing (5) comprises a removable front cover or lid, respectively, so that the display is gaugeable and a boundary contact is adjustable to which purpose keys on an electronic platine in the housing (5) may serve.

9. Measuring display device according to one of the preceding claims, **characterized in that** in the wall of the housing (5) sealable openings for gaugeing the display may be provided.

10. Measuring display device according to one of the preceding claims, **characterized in that** the diameter of the housing (5) does not essentially exceed the diameter of the pressure transformer (2), i.e. not more than 20%, preferably not more than 10%.

11. Measuring display device according to one of the preceding claims, **characterized in that** the measurements of the housing (5) which is preferably made of plastic material do not exceed 42 X 42 X 48 mms.

## Revendications

1. Dispositif d'affichage de mesure, avec un convertisseur de mesure de pression (2), un connecteur mâle (3) correspondant et un boîtier de conduite (7) qui lui est raccordé, ainsi qu'un boîtier (5) dans lequel est logé un écran de visualisation (6), **caractérisé en ce que** le convertisseur de mesure de pression (2) et le connecteur mâle (3) sont reliés au boîtier de conduite (7), selon une structure en sandwich, sur deux côtés opposés du boîtier (5) et **en ce que** le boîtier (5) est relié au convertisseur de mesure de pression (2) de manière à pouvoir pivoter autour de son axe longitudinal (L) s'étendant dans la direction de la structure en sandwich.

2. Dispositif d'affichage de mesure selon la revendication 1, **caractérisé en ce que** le boîtier (5) est relié au boîtier de conduite (7) de manière à pouvoir pivoter autour de l'axe longitudinal (L).

3. Dispositif d'affichage de mesure selon la revendication 1 ou 2, **caractérisé en ce que** le boîtier (5) peut être vissé sur un connecteur mal du convertisseur de mesure de pression (2) au moyen d'une vis centrale.

4. Dispositif d'affichage de mesure selon l'une des revendications 1 à 3, **caractérisé en ce que** le boîtier (5) peut pivoter axialement sur le convertisseur de mesure de pression (2) au moyen d'une bague-poignée (4) en raison du palier rotatif du connecteur mâle du convertisseur de mesure de pression.

5. Dispositif d'affichage de mesure selon l'une des revendications précédentes, **caractérisé en ce que** le dispositif électronique associé à l'écran de visualisation (6) est logé dans le boîtier (5).

6. Dispositif d'affichage de mesure selon l'une des revendications précédentes, **caractérisé en ce que** l'écran de visualisation (6) est disposé transversalement ou parallèlement à l'axe longitudinal (L).

7. Dispositif d'affichage de mesure selon l'une des revendications précédentes, **caractérisé en ce qu'**un affichage à cristaux liquides, à électrodes électroluminescentes ou analogique est prévu en tant qu'écran de visualisation (6).

8. Dispositif d'affichage de mesure selon l'une des revendications précédentes, **caractérisé en ce que** le boîtier (5) présente un cache frontal ou un couvercle (9) détachable, de telle sorte que l'affichage puisse être calibré et qu'un contact limite puisse être réglé, ce pour quoi servent des touches prévues le cas échéant sur une platine électronique dans le boîtier (5).

9. Dispositif d'affichage de mesure selon l'une des revendications précédentes, **caractérisé en ce que** des ouvertures susceptibles d'être verrouillées le cas échéant sont prévues dans la paroi du boîtier (5) pour calibrer l'affichage.

10. Dispositif d'affichage de mesure selon l'une des revendications précédentes, **caractérisé en ce que** le diamètre du boîtier (5) ne dépasse pas sensiblement le diamètre du convertisseur de mesure de pression (2), à savoir qu'il ne le dépasse pas de plus de 20 %, de préférence, pas de plus de 10 %.

11. Dispositif d'affichage de mesure selon l'une des revendications précédentes, **caractérisé en ce que** les dimensions du boîtier (5), composé de préférence de matière plastique, ne dépassent pas 42 x 42 x 48 mm.
